# EUROPEAN PATENT SPECIFICATION

(11) **EP 1 813 661 B1**
(45) Date of publication and mention of the grant of the patent: **09.11.2011**
(21) Application number: 07100812.2
(22) Date of filing: 19.01.2007
(51) Int. Cl.: C09K 11/59, C09K 11/64, C09K 11/71, C09K 11/78, C09K 11/81, H01J 61/44

(54) **High output fluorescent lamp with improved phosphor layer**
Hochleistungsleuchtstofflampe mit verbesserter Leuchtstoffschicht
Lampe fluorescente à haut rendement dotée d'une couche de luminophore améliorée

(30) Priority: 25.01.2006 US 761963 P; 30.11.2006 US 606689
(43) Date of publication of application: 01.08.2007
(73) Proprietor: GENERAL ELECTRIC COMPANY, Schenectady, NY 12345 (US)
(72) Inventor: Jansma, Jon B., Pepper Pike, OH 44124 (US)
(74) Representative: Szary, Anne Catherine

(56) References cited:
- EP-A1- 0 596 548
- GB-A- 2 408 382
- US-A- 3 501 662
- US-A- 5 602 444
- US-A1- 2003 184 239
- DATABASE WPI Week 199251 Derwent Publications Ltd., London, GB; AN 1992-421648 XP002454053 & JP 04 319246 A (MATSUSHITA ELECTRONICS CORP) 10 November 1992 (1992-11-10)

## Description

### FIELD OF THE INVENTION

The present invention relates to high output fluorescent lamps with improved phosphor layers.

### DESCRIPTION OF RELATED ART

Fluorescent lamps have become popular for use in stage, photographic studios, movie sets (both conventional film and digital formats), and art studios where bright, soft lighting is often required. T12 (3.81 cm (1.5 inch) diameter) and CFL (compact fluorescent lamp) lamps have been introduced, using full spectrum phosphor blends, to provide color corrected lighting for these applications. In most cases the lamps are operated at the maximum practical power levels to provide the greatest light levels, often with optional dimming for lighting control. The maximum amount of light obtainable from existing T12 fixtures is limited by the 3.81 cm (1.5 inch) diameter of the lamps in many instances. CFL lamps allow more compact fixture designs, but do not provide sufficient warm-up stability. There is a need for an intermediate diameter lamp (smaller diameter than a T12) offering increased stable light output from a given sized fixture providing much of the benefits of T12 diameter lamps, with most of the increased light levels possible from smaller sized lamps. There is a need for high light output, full spectrum, soft light sources for applications such as stage and studio, but which avoid striations or flickering when the lamp is operated in a dimmed condition (when a lamp is dimmed, it operates at a cooler temperature). Striations or flickering commonly occur when a T8 lamp is dimmed, and this is unacceptable for cinematography, video, stage and studio applications where flickering can interfere with camera operation and cause visual defects in the recorded images. There is a need for improved phosphor blends to achieve acceptable color performance under the condition of increased current; in particular there is a need for improved phosphor blends to balance out the increased Hg line "green" output at 546 nm which occurs when the power/current level is increased. Broad band phosphor blends are needed to achieve balanced color.

JP4319246 discloses a fluorescent lamp comprising a blend of phosphors comprising europium activated strontium aluminate, tin activated strontium/magnesium orthophosphate, europium activated barium/calcium/strontium halophosphate, antimony/manganese activated calcium halophosphate and tin activated barium/strontium/magnesium silicate.

### SUMMARY OF THE INVENTION

A mercury vapor discharge fluorescent lamp having a phosphor layer which has a phosphor blend, the phosphor blend being selected from the group consisting of (a) a blend of phosphors comprising 20-50 wt. % tin doped strontium phosphate, 5-20 wt. % calcium chlorofluoroapatite doped with antimony and manganese, 5-25 wt. % europium doped strontium aluminate, and 20-60 wt. % europium doped strontium barium chlorapatite; (b) a blend of phosphors comprising 40-70 wt. % tin doped strontium phosphate, 10-30 wt. % cerium magnesium borate, 0.2-5 wt. % lanthanum phosphate doped with terbium and cerium, and 10-35 wt. % europium doped strontium aluminate; and (c) a blend of phosphors comprising 30-50 wt. % cerium magnesium borate, 30-50 wt. % calcium chlorofluoroapatite doped with antimony and manganese, 0.2-10 wt. % manganese doped zinc silicate, and 10-30 wt. % europium doped strontium aluminate; in all cases the wt. % being based on all phosphors in the phosphor layer. The lamp is adapted to operate at a current of 250-1000 mA. A lighting unit is provided comprising at least two lamps as described above and a lamp holder, the lamps being mounted in the lamp holder in a planar array. A method of providing lighting comprises the steps of providing a lamp as described above and operating the lamp at a current of 250-1000 mA.

### BRIEF DESCRIPTION OF THE DRAWINGS

Embodiments of the present invention will now be described, by way of example only, with reference to the accompanying drawings, in which:
Fig. 1 shows diagrammatically, and partially in section, a fluorescent lamp according to the present invention;
Fig. 2 is a plan view of a lighting unit holding eight fluorescent lamps; and
Fig. 3 is a cross sectional view taken along line 3-3 of Fig. 2.

### DETAILED DESCRIPTION OF THE PREFERRED EMBODIEMENTS OF THE INVENTION

In the description that follows, when a preferred range, such as 5 to 25 (or 5-25), is given, this means preferably at least 5 and, separately and independently, preferably not more than 25.

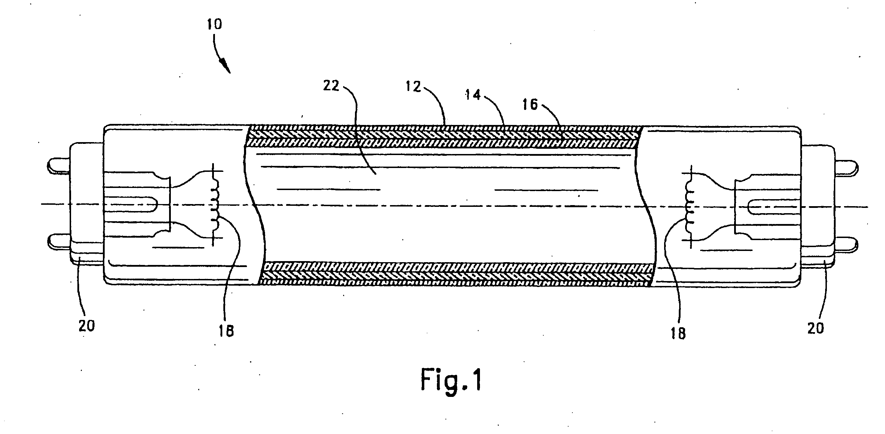

With reference to Fig. 1, there is shown a low pressure mercury vapor discharge fluorescent lamp 10, which is generally well known in the art. The fluorescent lamp 10 has a light-transmissive, preferably linear and cylindrical, glass tube or envelope 12 that preferably has a circular cross section. The inner surface of the envelope 12 is preferably provided with a reflective barrier coating or layer 14 for improved light softness and brightness maintenance with age. The inner surface of the barrier layer 14 is provided with a phosphor layer 16, the barrier layer 14 being between the envelope 12 and the phosphor layer 16. Phosphor layer 16 is preferably a rare earth phosphor layer or contains rare earth phosphors, such as a rare earth multi-phosphor layer as described hereinafter. Lamp 10 is preferably a T8 lamp, which is generally known in the art, preferably nominally 1.22 m (48 inches or 4 feet) in length, a cylindrical tube, and having a nominal outer diameter of 2.54 cm (1 inch) or an outer diameter of 2.54 cm (1 inch) or about 2.54 cm (1 inch). The T8 lamp can also be nominally 0.61, 0.91, 1.83 or 2.44 m (2, 3, 6 or 8 feet) long.

Lamp 10 is hermetically sealed by bases 20 attached at both ends and electrodes or electrode structures 18 (to provide an arc discharge) are respectively mounted on the bases 20. A discharge-sustaining fill 22 is provided inside the sealed glass envelope, the fill comprising or being an inert gas or inert gas mixture at a low pressure in combination with a small quantity of mercury to provide the low vapor pressure manner of lamp operation.

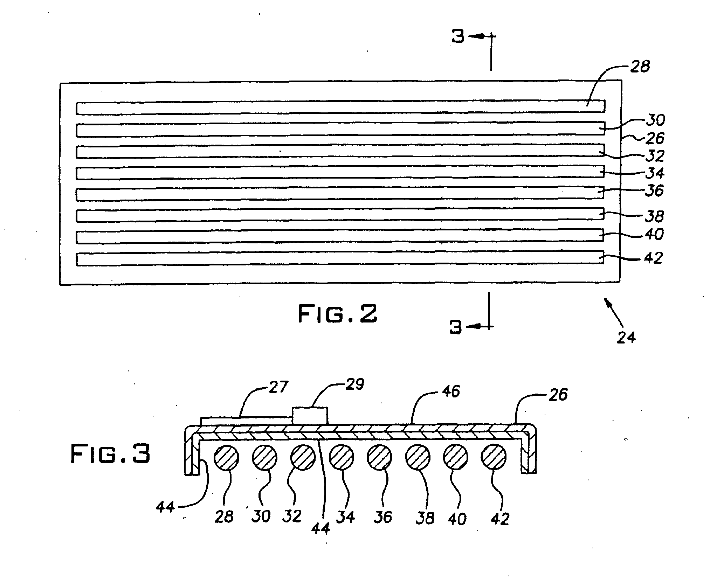

With reference to Figs. 2 and 3, there is shown a lighting unit or fixture 24, (such as a T8 cinema fixture), comprising a lamp holder 26, an electric power supply unit 27 and eight fluorescent lamps 28, 30, 32, 34, 36, 38, 40 and 42. Unit 24 may also have a dimmer control 29 to dim the lamps when desired. A dimmer control as known in the art may be used to provide wide range dimming. Lamp holder 26 includes a cover 46, typically metal or plastic, lined with a layer 44 of reflective material as known in the art. Each of lamps 28, 30, 32, 34, 36, 38, 40 and 42 is preferably the same as lamp 10. With reference to Fig. 3, the distance or spacing between adjacent lamps is preferably 0.64-2.54 or 0.64-1.91 or 0.64-1.27 cm (¼-1 or ¼-3/4 or ¼-1/2, inch), or not more than 0.51, 0.64, 0.84, 1.27, 1.59, 1.91, 2.22 or 2.54 cm (1/5,¼, 1/3,½, 5/8, ¾, 7/8, or 1, inch).

Lighting unit or fixture 24 is preferably a specialty light fixture for providing soft lighting for cinematography, stage, video, and studio applications, where the lighting unit can be operated to provide or shine or cast light onto an object such as a person or animal or furniture or anything else in a scene and then record an image of said lighted object such as via a camera, movie camera, film camera, digital camera, photography, etc. Unit 24 provides a close packed planar array (the lamps are arrayed in a plane) of lamps such as lamp 10, preferably 2-14 or 2-12 or 4-12 or 6-12 or 4, 6, 8, 10 or 12 lamps in the close packed planar array.

Lamp 10 may operate at 35-70, 40-70, 50-70, 60-70, 65-70, 67-70, 68-70, 69-70, or about 70, watts, or 240-700, 275-650, 400-600, 500-600, 550-600, 570-600, 580-600, 590-600, or about 600, mA. Lamp 10 preferably operates at a current of 250-1000, more preferably 300-900 or 350-900 or 350-800 or 400-700, more preferably 425-675 or 450-750 or 450-650 or 500-600 or 550-650, mA. The electrodes in lamp 10 are preferably those capable of handling a current of 250-1000, more preferably 300-900 or 350-900 or 350-800 or 400-700, more preferably 425-675 or 450-750 or 450-650 or 500-600 or 550-650, mA or the other currents or current ranges described above. T8 lamps can support high power (current level) electrodes with relative ease. The inert gas or fill gas of the fill 22 is preferably a combination of neon and argon, preferably 5-80 or 6-70 or 8-60 mole % neon, more preferably 10-50 mole % neon, more preferably 15-40 mole % neon or 10-30 mole % neon or 15-25 or 15-20 mole % neon or at least 20, 25, 30, 35, 40, 50 or 60 mole % neon, in each case the balance being argon. The fill gas pressure, or gas pressure of the fill, is preferably 1.5-5, more preferably 2-4 or 2.3-3.5, alternatively about 2, 2.5 or 3, or 2-3 or 2-2.5, more preferably 2.5-3, torr at the conventional fill temperature as known in the art. Barrier layer 14 is preferably as taught in U.S. Pat. 5,602,444 and is preferably a blend of 5-80 or 10-65 or 20-40 weight percent gamma alumina and 20-95 or 35-90 or 60-80 weight percent alpha alumina; this diffuses and softens the light. Phosphor layer 16 is preferably such as to provide Cinema 32 (3200K) or Cinema 55 (5500K) color temperature when operated at 70 watts or 600 mA. Phosphor layer 16 preferably has a coating weight of 1-5 or 2-4 mg/cm² or other conventional coating weight.

When lamps such as lamp 10 are operated at 70 watts or 600 mA, lamp life and lumen maintenance may be reduced, but this trade-off is acceptable for stage and studio applications where high light levels for short periods of time (several hours at a time) are needed. Lamp test results indicate at least 2000 hour life is possible when operating phototype 1.22 m (4 foot) T8 lamps (fill gas 10 mole % neon and 90 mole % argon; fill gas pressure 333.3 Pa (2.5 torr)) at 70 watts using a 3 hour on, 20 min. off cycle.

Typical 1.22 m (4 foot) T8 lamps operate at about 32 watts and about 200 mA current. A concern when operating T8 lamps at current levels greater than 200 mA is loss of efficiency (LPW). However, a plot of LPW vs. lamp current for phototype 5500K and 3200K T8 full spectrum lamps comparable to those mentioned in the prior paragraph showed total variation in efficiency from 200-600 mA to be less than 2.5 LPW, or less than 5% for each type (5500K and 3200K). This is a minimal trade-off for the advantage of increased output from a given sized lamp. Also, the peak performance occurs above the normal 32 watt operating current (near 200 mA) thus these lamps may operate at improved LPW efficiency when used at 300-400 mA operating current (about 45 watts), which may be the most common use level when operated using a dimmer controlled fixture. One of the benefits of the present invention is that the lamp can be operated at full power at about 70 watts or 600 mA to provide maximum light output, but can then be dimmed using a dimmer control when desired for certain effects in stage and studio applications. It is believed that at about 70 watts (600 mA) the invented lamp will provide about twice the lumen level obtained at standard 32 watt (200 mA) use levels. It is believed that there is improved performance, both in terms of LPW and lamp bulb wall temperature, when the blend of neon and argon described above is used, instead of pure argon. Reduced fill gas pressure, such as about 266.6 Pa (2 torr), can provide a little higher LPW levels, at the cost of reduced life, which is an acceptable trade-off for the invented products. The present invention permits wide range dimming capability and acceptable operation over a wider range of power/current (such as when dimmed from 70 to 65 to 60 to 50 to 40 to 30 to 20 to 10 watts (or to less than any of said quantities) or from 600 to 550 to 500 to 400 to 300 to 250 to 200 to 150 to 100 to 50 to 40 to 30 to 20 mA (or to less than any of said quantities)), and especially at increased power/current levels. Use of the described fill composition and pressure contribute significantly to reducing or eliminating striation formation in the fluorescent lamp, especially when operated in a dimmed condition where striations are more likely to occur or to last longer after starting.

In order to provide full spectrum, high current, high output lamps as described above with daylight and tungsten colors, the following phosphor blends have been invented. The following abbreviations for phosphors are used (with the phosphor color also indicated). SR is red and is tin doped strontium phosphate, "strontium red". WW is red and is commonly referred to as Warm White halophosphor and is calcium chlorofluoroapatite doped with antimony and manganese. SAE is blue/green and is strontium aluminate, europium doped. SECA is blue and is strontium barium chlorapatite, doped with europium. CBM is red and is cerium magnesium borate. LAP is green and is lanthanum phosphate, doped with terbium and cerium. ZS is green and is zinc silicate, manganese doped. BH is blue and is manganese free halophosphor, Blue Halophosphor. BECA is blue/green and is barium chlorapatite, doped with europium. MG is red and is magnesium fluorogerminate. The following tables show preferred weight % ranges for the components of the blend, based upon the total weight of all phosphors in the blend.

| Blend A; for 5500K Daylight color | | | |
|---|---|---|---|
| Phosphor | Wt. % | More Preferred Wt. % | More Preferred Wt. % |
| SR | 20-50 | 30-40 | 36.7 |
| WW | 5-20 | 10-15 | 12.2 |
| SAE | 5-25 | 10-20 | 14 |
| SECA | 20-60 | 25-50 | 37.1 |
| | | 32-42 | |

| Blend B; for 3200K Tungsten color | | | |
|---|---|---|---|
| Phosphor | Wt. % | More Preferred Wt. % | More Preferred Wt. % |
| SR | 40-70 | 50-60 | 56.9 |
| CBM | 10-30 | 15-25 | 19 |
| LAP | 0.2-5 | 0.5-2 | 1.2 |
| SAE | 10-35 | 15-27 | 22.9 |
| | | 20-25 | |

| Blend C; for 3200K Tungsten color | | | |
|---|---|---|---|
| Phosphor | Wt. % | More Preferred Wt. % | More Preferred Wt. % |
| CBM | 30-50 | 35-45 | 39.9 |
| WW | 30-50 | 35-45 | 39.9 |
| ZS | 0.2-10 | 1-5 | 2.4 |
| SAE | 10-30 | 15-22 | 17.9 |

One of the benefits of the invented phosphor blends for Daylight and for Tungsten color ranges is that for the described high current, high output T8 lamps, they balance out the increased intensity of the visible Hg green emission at 546 nm. The invented phosphor blends preferably provide a CRI of at least 87, 88, 89, 90, 91, 92, 93, 94, 95, 96 and/or 97, and preferably provide lumens per watt of at least 44, 45, 46, 47, 48, 50, 52 and 53, particularly at 5500K and 3200K. The invented phosphor blends preferably provide light having a color temperature of about 2900-3500, 3000-3400, 3100-3300, 3200, 5000-6000, 5100-5900, 5200-5800, 5300-5700, 5400-5600, or 5500, K.

The three invented phosphor blends were tested against existing blends. Important requirements are color stability over the range of operating power/current, and good maintenance of color and light output over the expected useful life. F40T12/HO and 55 watt CFL lamp performance were used as a benchmark. Blend D is a conventional Chroma 50 blend; Blend E is an existing T12 5500K blend; Blend F is an existing T12 3200K blend. Blends D, E and F are included in the testing to illustrate the performance of existing phosphor blends for these applications, under conditions of increased current.

The six blends A, B, C, D, E and F were tested using water based phosphor coating formulations coated over an alumina reflective barrier coating (ie, the barrier layer was between the glass and the phosphor layer). The alumina barrier coating used was a known coating as taught in U.S. Pat. 5,602,444. This barrier coating provides efficient phosphor use, improved phosphor brightness maintenance, reduced mercury loss, and additional light diffusion at the inner glass surface of the lamp tubing. The lamps tested were all 1.22 m (4 foot) T8 lamps with 10 mole % neon, 90 mole % argon, and fill gas pressure of 333.3 Pa (2.5 torr). The lamp test results are 100 hour photometric readings on T8 lamps operating at 600 mA current; % means weight percent; R1 and R2 are red phosphors; G are generally green phosphors; B are blue phosphors. LB is defined as "Light Balance", or Mired Shift, expressed in Mireds (reciprocal degrees Kelvin). CC is defined as "Color Correction Index" and is scaled to correspond with magenta and green Kodak Wratten filter step levels or scale defined units commercially utilized; m corresponds to magenta scale and g is for green filters.

| Blend | Color | R1 | R2 | G | B |
|---|---|---|---|---|---|
| A | 5500K | SR-36.7% | WW-12.2% | SAE-14.0% | SECA-37.1% |
| D | 5500K | SR-33.8% | --- | BH-58.8% | SECA-7.4% |
| E | 5500K | SR-39.8% | --- | BECA-35% | SECA-25.2% |
| B | 3200K | SR-56.9% | CBM-19% | LAP-1.2% | SAE-22.9% |
| C | 3200K | CBM-39.9% | WW-39.9% | ZS-2.4% | SAE-17.9% |
| F | 3200K | SR-56.9% | MG-14.2% | LAP-5.6% | BECA-23.4% |

| Blend | Lumens | LPW | x | y | CRI | LB | CC |
|---|---|---|---|---|---|---|---|
| A | 2600 | 47.7 | 0.31 | 0.313 | 95.4 | +11 | 4.0 |
| m | | | | | | | |
| D | 2490 | 46.1 | 0.313 | 0.316 | 93.5 | +21 | 3.0 |
| m | | | | | | | |
| E | 2525 | 46.5 | 0.31 | 0.316 | 96 | +5.5 | 5.0 |
| m | | | | | | | |
| B | 2490 | 46.0 | 0.421 | 0.389 | 97.7 | +9 | 0 |
| C | 2940 | 54.1 | 0.42 | 0.389 | 94.4 | +25 | 2.0 |
| m | | | | | | | |
| F | 2420 | 44.7 | 0.414 | 0.39 | 91 | +7 | 2.0 |
| g | | | | | | | |

The invented blends A (5500K Daylight), B and C (both 3200K Tungsten) exhibited improved CRI, lumens and LPW under higher output (600 mA) conditions. The use of Warm White halophosphor (WW) in Blends A (5500K) and C (3200K) is particularly inventive.

In another test, 1.22 m (4 foot) T8 lamps were prepared similar to those described above and coated with phosphor Blends A (5500K) and C (3200K) and tested for color stability over a broad power range. The test results are as follows.

| Blend A (5500K) | | | Blend C (3200K) | | |
|---|---|---|---|---|---|
| Current (mA) | Watts | CCT | Current (mA) | Watts | CCT |
| 200 | 28 | 6319 | 200 | 27.9 | 3012 |
| 261 | 33.8 | 6236 | 261 | 33.6 | 2949 |
| 300 | 37.1 | 6223 | 300 | 36.7 | 3059 |
| 400 | 44.5 | 6206 | 400 | 44.3 | 3118 |
| 500 | 51.1 | 6250 | 500 | 50.9 | 3192 |
| 600 | 57.1 | 6339 | 600 | 56.8 | 3271 |

Although the correlated color temperature (CCT) does shift, it is no more than about 200-300 degrees over the wide range of power/current tested, and should be adequate for the desired applications. It is much better than CFL color stability with dimming and much better than incandescent (halogen) lamps when dimmed, which can drop 700 to 800K when dimming down to 50% light output.

In another test, initial lumen maintenance for 1.22 m (four foot) T8 samples made with coating Blends A and C showed less than 10% loss in brightness in 1000 hours of use. Color shift was also acceptable for this time period.

The present invention can also be used in any high CRI (over 87 or 90) or dimmable fluorescent lamp, such as made for studio lighting applications, and can also be used in a wide spectrum lamp for general lighting applications.

## Claims

1. A mercury vapor discharge fluorescent lamp comprising a light-transmissive envelope (12) having an inner surface, a pair of electrodes (18) mounted inside said envelope (12), a discharge-sustaining fill (22) comprising inert gas sealed inside said envelope (12), and a phosphor layer (16) having a phosphor blend inside the envelope (12) and adjacent the inner surface of the envelope (12), said lamp adapted to operate at a current of 250-1000 mA, the phosphor blend being selected from the group consisting of
(a) a blend of phosphors comprising 20-50 wt. % tin doped strontium phosphate, 5-20 wt. % calcium chlorofluoroapatite doped with antimony and manganese, 5-25 wt. % europium doped strontium aluminate, and 20-60 wt. % europium doped strontium barium chlorapatite;
(b) a blend of phosphors comprising 40-70 wt. % tin doped strontium phosphate, 10-30 wt. % cerium magnesium borate, 0.2-5 wt. % lanthanum phosphate doped with terbium and cerium, and 10-35 wt. % europium doped strontium aluminate; and
(c) a blend of phosphors comprising 30-50 wt. % cerium magnesium borate, 30-50 wt. % calcium chlorofluoroapatite doped with antimony and manganese, 0.2-10 wt. % manganese doped zinc silicate, and 10-30 wt. % europium doped strontium aluminate; in all cases the wt. % being based on all phosphors in the phosphor layer (16).

2. The lamp of claim 1, said envelope (12) being cylindrical and having a nominal outer diameter of 2.54 cm (1 inch).

3. The lamp of claim 1 or claim 2, said lamp being a T8 lamp about 1.22 m (4 feet) long.

4. The lamp of claim 1, the inert gas in the fill (22) being 5-80 mole % neon, balance argon, said fill (22) having a gas pressure of 199.98 to 666.61 Pa (1.5-5 torr.).

5. The lamp of claim 1, said lamp further comprising a barrier layer (14) between the envelope (12) and the phosphor layer (16).

6. A lighting unit (24) comprising at least 2 lamps (28, 30) according to any one of the preceding claims and a lamp holder (26), said lamps (28, 30) being mounted in said lamp holder (26) in a planar array.

7. A method of providing lighting comprising the steps of
(a) providing a lamp according to claim 1, and
(b) operating said lamp at a current of 250-1000 mA.

8. The method of claim 7, comprising the further step of dimming said lamp from more than 500 mA to less than 300 mA.

9. The method of claim 7, wherein said lamp is mounted in a lighting unit (24) comprising at least 2 such lamps (28, 30) mounted in a lamp holder (26) in a planar array.

10. The method of claim 9, further comprising the steps of operating said lighting unit (24) so as to provide light onto an object and recording an image of said lighted object.

## Patentansprüche

1. Quecksilberdampfentladungs-Leuchtstofflampe, die einen lichtdurchlässigen Kolben (12) mit einer Innenoberfläche, ein innerhalb des Kolbens (12) montiertes Elektrodenpaar (18) und eine inertes Gas aufweisende in dem Kolben (12) eingeschlossene entladungsbeständige Füllung (22) und eine Leuchtstoffschicht (16) mit einer Leuchtstoffmischung in dem Kolben (12) und angrenzend an die Innenoberfläche des Kolbens (12) aufweist, wobei die Lampe dafür angepasst ist, bei einem Strom von 250 bis 1000 mA zu arbeiten, wobei die Leuchtstoffmischung aus der Gruppe ausgewählt ist, welche besteht aus:
(a) einer Mischung von Leuchtstoffen die 20 bis 50 Gewichtsprozent Zinn-dotiertes Strontiumphosphat, 5 bis 20 Gewichtsprozent mit Antimon und Mangan dotiertes Kalziumchlorfluorapatit, 5 bis 25 Gewichtsprozent Europium-dotiertes Strontiumaluminat, und 20 bis 60 Gewichtsprozent Europium-dotiertes Strontiumbariumchlorapatit aufweist;
(b) einer Mischung von Leuchtstoffen, die 40 bis 70 Gewichtsprozent Zinn-dotiertes Strontiumphosphat, 10 bis 30 Gewichtsprozent Zermagnesiumborat, 0,2 bis 5 Gewichtsprozent mit Terbium und Zer dotiertes Lanthanphosphat, und 10 bis 35 Gewichtsprozent Europium-dotiertes Strontiumaluminiat aufweist; und
(c) einer Mischung von Leuchtstoffen, die 30 bis 50 Prozent Zermagnesiumborat, 30 bis 50 Gewichtsprozent mit Antimon und Mangan dotiertes Kalziumchlorfluorapatit, 0,2 bis 10 Gewichtsprozent Mangan-dotiertes Zinksilikat, und 10 bis 30 Gewichtsprozent Europium-dotiertes Strontiumaluminat aufweist; wobei in allen Fällen die Gewichtsprozente auf allen Leuchtstoffen in der Leuchtstoffschicht (16) basieren.

2. Lampe nach Anspruch 1, wobei der Kolben (12) zylindrisch ist und einen Nenndurchmesser von 2,54 cm (1 inch) besitzt.

3. Lampe nach Anspruch 1 oder Anspruch 2, wobei die Lampe eine T8-Lampe von etwa 1,22 m (4 feet) Länge ist.

4. Lampe nach Anspruch 1, wobei das inerte Gas in der Füllung (22) 5 bis 80 Mol% Neon und der Rest Argon ist, wobei die Füllung (22) einen Gasdruck von 199,98 bis 666,61 Pa (1,5 bis 5 Torr) hat.

5. Lampe nach Anspruch 1, wobei die Lampe ferner eine Grenzschicht (14) zwischen dem Kolben (12) und der Phosphorschicht (16) hat.

6. Beleuchtungseinheit (24), die wenigstens zwei Lampen (28, 30) gemäß einem der vorstehenden Ansprüche und einen Lampenhalter (26) aufweist, wobei die Lampen (28, 30) in dem Lampenhalter (28) in einer ebenen Anordnung montiert sind.

7. Verfahren zum Erzeugen von Beleuchtung mit den Schritten:
(a) Bereitstellen einer Lampe gemäß Anspruch 1, und
(b) Betreiben der Lampe bei einem Strom von 250 bis 1000 mA.

8. Verfahren nach Anspruch 7, ferner mit dem Schritt einer Dimmung der Lampe von mehr als 500 mA auf weniger als 300 mA.

9. Verfahren nach Anspruch 7, wobei die Lampe in einer Beleuchtungseinheit (24) montiert ist, welche wenigstens zwei derartige Lampen (28, 30) aufweist, die in einem Lampenhalter (26) in einer ebenen Anordnung montiert sind.

10. Verfahren nach Anspruch 9, ferner mit den Schritten eines Betriebs der Beleuchtungseinheit (24) so, dass sie Licht auf ein Objekt liefert, und einer Aufzeichnung eines Bildes des beleuchteten Objektes.

## Revendications

1. Lampe fluorescente à décharge à vapeur de mercure, comprenant une enveloppe (12) transmettant la lumière ayant une surface intérieure, une paire d'électrodes (18) montées à l'intérieur de ladite enveloppe (12), un remplissage (22) d'entretien de décharge constitué par un gaz inerte enfermé hermétiquement à l'intérieur de ladite enveloppe (12), et une couche de luminophores (16) ayant un mélange de luminophores à l'intérieur de l'enveloppe (12) et adjacente à la surface intérieure de l'enveloppe (12), ladite lampe étant conçue pour fonctionner à une intensité de 250 à 1000 mAmp, le mélange de luminophores étant choisi dans le groupe comprenant :
(a) un mélange de luminophores composé de 20 à 50 % en poids de phosphate de strontium dopé à l'étain, 5 à 20 % en poids de chlorofluoroapatite de calcium dopée à l'antimoine et au manganèse, 5 à 25 % en poids d'aluminate de strontium dopé à l'europium et 20 à 60 % en poids de chlorapatite de strontium et de baryum dopée à l'europium ;
(b) un mélange de luminophores composé de 40 à 70 % en poids de phosphate de strontium dopé à l'étain, 10 à 30 % en poids de borate de cérium et de magnésium, 0,2 à 5 % en poids de phosphate de lanthane dopé au terbium et au cérium, et 10 à 35 % en poids d'aluminate de strontium dopé à l'europium ; et
(c) un mélange de luminophores composé de 30 à 50 % en poids de borate de cérium et de magnésium, 30 à 50 % en poids de chlorofluoroapatite de calcium dopée à l'antimoine et au manganèse, 0,2 à 10 % en poids de silicate de zinc dopé au manganèse et 10 à 30 % en poids d'aluminate de strontium dopé à l'europium ; dans tous les cas, le % en poids repose sur la totalité des luminophores de la couche de luminophores (16).

2. Lampe selon la revendication 1, ladite enveloppe (12) étant cylindrique et ayant un diamètre extérieur nominal de 2,54 cm (1 pouce).

3. Lampe selon la revendication 1 ou la revendication 2, ladite lampe étant une lampe T8 d'environ 1,22 m (4 pieds) de long.

4. Lampe selon la revendication 1, le gaz inerte dans le remplissage (22) étant composé de 5 à 80 % en moles de néon, le reste étant de l'argon, ledit remplissage (22) ayant une pression de gaz de 199,98 à 666,61 Pa (1,5 à 5 torr).

5. Lampe selon la revendication 1, ladite lampe comprenant en outre une couche d'arrêt (14) entre l'enveloppe (12) et la couche de luminophores (16).

6. Dispositif d'éclairage (24) comprenant au moins 2 lampes (28, 30) selon l'une quelconque des revendications précédentes et un support (26) de lampes, lesdites lampes (28, 30) étant montées sous la forme d'un ensemble plan dans ledit support (26) de lampes.

7. Procédé de création d'éclairage, comprenant les étapes de
(a) réalisation d'une lampe selon la revendication 1, et
(b) mise en marche de ladite lampe à une intensité de 250 à 1000 mAmp.

8. Procédé selon la revendication 7, comprenant en outre l'étape de gradation de l'intensité de la lampe de plus de 500 mAmp à moins de 300 mAmp.

9. Procédé selon la revendication 7, dans lequel ladite lampe est montée dans un dispositif d'éclairage (24) comportant au moins deux lampes (28, 30) de ce type montées sous la forme d'un ensemble plan dans un support (26) de lampes.

10. Procédé selon la revendication 9, comprenant en outre les étapes de mise en marche dudit dispositif d'éclairage (24) afin d'éclairer un objet et d'enregistrement d'une image dudit objet éclairé.
